# EUROPEAN PATENT SPECIFICATION

(11) **EP 0 551 138 B1**
(45) Date of publication and mention of the grant of the patent: **02.04.1997**
(21) Application number: 93100286.9
(22) Date of filing: 11.01.1993
(51) Int. Cl.: G02F 1/17

(54) **Film for a light valve, and method for manufacturing the film**
Film für Lichtventile und Verfahren zu seiner Herstellung
Film pour des valves de lumière et sa méthode de fabrication

(30) Priority: 10.01.1992 KR 25992; 01.07.1992 KR 1165992
(43) Date of publication of application: 14.07.1993
(73) Proprietor: HANKUK GLASS INDUSTRIES, INC., Seoul (KR)
(72) Inventor: LEE, Jeong Hoon, Yangchon-Ku Seoul (KR); YU,Byung Seok, Inchon (KR); KIM, Eung Su, Kajwa-Dong So-Ku Inchon (KR)
(74) Representative: Beetz & Partner Patentanwälte

(56) References cited:
- US-A- 4 707 080
- US-A- 4 919 521
- MOLECULAR CRYSTALS AND LIQUID CRYSTALS (INC. NONLINEAR OPTICS ) vol. 165, December 1988, READING GB pages 511 - 532 J.W.DOANE & AL 'POLYMER DISPERSED LIQUID CRYSTALS FOR ..' CHAPTER II MATERIALS AND PHASE SEPARATION METHODS
- SEARS, J.K. et al., "The Technology of Plasticizers", 1982, John Wiley and Sons, New York, pp. 78-90, 966-975
- ELIAS, H.G., "Makromoleküle, Strukur - Eigenschaften - Synthesen - Stoffe", 1975, Hüthig und Wepf Verlag, Basel, pp. 183-185, 204-205

## Description

### Field of the Invention

The present invention relates to films comprising a liquid polarizing suspension dispersed in a polymeric resin. More particularly, it relates to films comprising microdroplets and/or interconnected structure of a liquid polarizing suspension. It also relates to methods for fabricating such films.

### Background Art

A light valve was invented and patented by Edwin H. Land (U.S. Patent Nos. 1,951,664 and 1,955,923). Land's light valve is a cell comprising two substrates, with at least one of them being transparent. The substrates bear electrodes, usually in the form of a transparent conductive oxide (TCO) coating. The substrates, which form the walls of the cell, are spaced a small distance apart. The cell contains a suspension of small particles in a liquid suspending medium. In the absence of an applied electric field, the particles in the liquid suspension exhibit random Brownian motion, and a beam of light passing into the cell is reflected, transmitted or absorbed depending upon the nature and concentration of the particles and the energy content of the light. When an electric field is applied through the suspension, the particles become aligned parallel to the electric field, and most of the light can pass through the cell. Difficulties with these early light valves included particle settling, particle clustering, color change by heat, reduction of off-state optical density, and degradation by ultraviolet (UV) light, so that suspended-particle light valves have not heretofore been developed into practical commercial devices.

Some of these difficulties, such as particle settling, particle clustering, color change by heat, and reduction of off-state optical density have been solved by R.L. Saxe (U.S. Patent Nos. 3,756,700; 4,247,175; 4,273,422; 4,407,565; and 4,422,963), F.C. Lowell (U.S. Patent No. 3,912,365), and R.I. Thompson (U.S. Patent No. 4,078,856). Here, light valves contained a liquid suspension of solid particles of colloidal size, a polymeric system for helping to disperse the particles in the liquid, and a polymeric stabilizer. Mentioned difficulties were overcome by matching of the densities of suspended particles and suspending medium, and by adding the polymeric stabilizer.

However, with particles in liquid suspension, and when the vertical dimension of a cell is large, hydrostatic pressure of the liquid suspension causes a pressure difference between the upper and the lower of a cell. Resulting net outward forces on the substrates cause bowing and distortion of the substrates into non-planar surfaces. Bowing or distortion in turn leads to non-uniform suspension thickness and non-uniform optical density across the cell. Also, when such light valves are used as windows for buildings, a corresponding inward-bowing effect can result due to wind or difference in pressure between inside and outside a building. Other disadvantages are degradation due to UV-radiation, difficulties in filling or pouring the liquid suspension to a cell, agglomeration of particles in suspension, leaking of the suspension due to failure of a seal, and unequal response time and optical density due to a voltage drop from an edge to the middle of a TCO-substrate.

J. Fergason (U.S. Patent Nos. 4,435,047; 4,579,423; and 4,616,903) and J.L. West (U.S. Patent No. 4,685,771) invented films comprising microdroplets of a liquid-crystal material dispersed in a polymeric matrix. In these films, micron-size liquid-crystal droplets are dispersed in and surrounded by polymeric material. In the absence of an applied field, light passing through the film is strongly forward-scattered, giving the film a milky translucent appearance. When an electric field is applied, the liquid-crystal molecules become aligned and the film becomes transparent. Formation of uniform liquid-crystal droplets in a polymeric matrix can be achieved by one of a number of phase separation processes, involving, e.g., polymerization, thermal processing, solvent evaporation, or emulsifying.

The light valves invented by J. Fergason and J.L. West are milky translucent in the absence of an applied voltage. Their light scattering properties detract from their aesthetic appeal and thus limit their applicability to displays and windows. Furthermore, the liquid crystal partially interacts with the polymeric matrix, as a plasticizer and a mixture of several liquid crystal materials is used. As a result, in the presence of an applied field, the transparent state remains milky because of a difference between the refractive indices of the liquid crystal and the polymeric matrix. The optical use as a light valve is limited to switching functions between the transparent and opaque states. Such a light valve can be used for curtainless windows and the- like, but is not applicable for so-called smart windows, where a continuous control of the transmittance of solar radiation is required. Moreover, since liquid crystal materials are affected by UV-radiation, a UV-blocking filter or UV-absorbing additive is necessary. Specifically with respect to nematic liquid-crystal materials, their applicability is limited because of their temperature sensitivity.

US-A-4 919 521 discloses a light valve comprising a film made of a solid matrix layer, wherein micro-capsules containing a suspension of magnetically anisotropic particles are dispersed. According to this document, the matrix polymer may also form the walls of the micro-capsules. The methods for making these films do not involve formation of microdroplets through phase separation of the suspending medium from the polymer matrix material due to partial or complete incompatibility but are based on usual micro-encapsulation techniques.

### Summary of the Invention

It is an object of the present invention to provide films comprising microdroplets of a liquid suspension dispersed in a solid or semisolid polymeric film.

It is a further object of the present invention to provide films which comprise an interconnected structure of a liquid suspension dispersed in a polymeric film.

It is another object of the present invention to provide for convenience of fabrication and to alleviate sealing difficulties encountered with conventional light valves.

It is another object of the present invention to provide films whose radiation transmittance can be controlled with an electric field and which have high resistance to UV-light and to heat.

It is another object of the present invention to provide films which can be used for curtainless windows and to smart windows with continuous control of transmittance of solar radiation.

A further object is to provide corresponding methods for preparing these films and their use as optical shutters and for similar purposes.

The above objects are achieved according to the independent claims. The dependent claims relate to preferred embodiments.

The film for light valves according to the present invention is defined in claim 1.

Method for the preparation of these films are defined in claims 10 and 12.

According to a preferred embodiment of the above-explained method the phase separation is effected by thermal processing, the thermal processing comprising the steps of:
- forming a homogeneous solution from a mixture of a polymer and a liquid polarizing solution at elevated temperature,
   and
- cooling the homogeneous solution into a miscibility gap, thereby causing phase separation.

The films according to the present invention are obtainable by one of the above claimed methods.

A preferred film comprises light-polarizing particles sized from 0.1 to 1 µm, a polymeric stabilizer or dispersing agent for keeping the particles in suspension, a suspending medium, e.g., a plasticizer, having good dispersion characteristics, being incompatible or partially compatible with a polymeric matrix, and having a refractive index which is matched to the refractive index of the polymeric matrix.

### Brief Description of the Drawings

Fig. 1 is a cross-sectional view of a prior-art light valve including a liquid polarizing suspension;
Figs. 2 and 3 are schematics of the close (off, unactivated, dark) and open (on, activated, transparent) states of a prior-art light valve including a liquid polarizing suspension;
Fig. 4 is a fragmentary, cross-sectional schematic of a light valve in accordance with a preferred embodiment of the present invention, including a transparent plastic film containing microdroplets of a liquid polarizing suspension;
Figs. 5 and 6 are fragmentary schematics of the closed (off, unactivated, dark) and open (on, activated, transparent) states of a film in accordance with the invention, comprising microdroplets of a liquid suspension in a polymeric matrix;
Fig. 7 is a fragmentary, cross-sectional schematic of a light valve in accordance with a preferred embodiment of the present invention, including a transparent film containing an interconnected structure of droplets of a liquid polarizing suspension; and
Figs. 8 and 9 are fragmentary, cross-sectional schematics of the closed(off, unactivated, dark) and open (on, activated, transparent) states of a film in accordance with the invention, comprising an interconnected structure of droplets of liquid suspension in a polymeric matrix.

### Detailed Description of the Preferred Embodiments

Prior-art difficulties are alleviated forming a film comprising a liquid polarizing suspension dispersed in a polymeric matrix. In the absence of an AC-voltage applied to the film, particles in microdroplets and/or an interconnected structure of the liquid polarizing suspension exhibit random Brownian motion, and the film is dark blue due to the electro-dichroic effect of polarizing particles. When an AC-voltage is applied across the film, the particles in the liquid polarizing suspension become aligned parallel to the electric field, and, when the refractive indices of the polymeric matrix and the suspension are matched, the film becomes transparent. Preferred films are less prone to difficulties in filling or pouring the liquid suspension to a cell, agglomeration of particles in suspension, leaking of the suspension due to failure of a seal, and unequal response time and optical density due to a voltage drop from an edge to the middle of a TCO-substrate. A preferred suspension contains a fluoro-copolymer suspending medium, a polymeric stabilizer such as an acrylic copolymer, a UV-absorbing agent, and a dispersing agent. When a film is prepared from such a suspension by phase separation by polymerization, solvent evaporation, or thermal treatment, care is required to match the refractive indices of the liquid suspension and the polymeric matrix. Also, the particles should remain in the microdroplets segregated from the polymeric matrix, for proper alignment in an applied electric field. (When nitrocellulose was previously used in making the polarizing particles for good dispersion and for particle uniformity, light-polarizing particles could remain in the polymeric matrix because the polymer is almost compatible with nitrocellulose.)

Preferred films of the present invention comprise a light-polarizing liquid suspension and a polymeric matrix about one to four times the amount of liquid suspension. The liquid suspension comprises 1 to 20 wt.% of light-polarizing particles, 60 to 98 wt.% of suspending medium, and 1 to 20 wt.% of polymeric stabilizer or dispersing agent for keeping the particles suspended in suspending medium.

Light-polarizing particles are formed as polyhalides by reaction of a precursor (pyrazine-2,3-dicarboxylic acid, pyrazine-2,5-dicarboxylic acid, pyridine-2,5-dicarboxylic acid, hydroxyquinoline, dihydrocinchonidine sulfate, or 2-hydroxypyridine) with hydrogen iodide and iodine in the presence of a protective material such as a copolymer and nitrocellulose.

Suitable light-polarizing particles are described in U.S. Patent Nos. 2,041,138; 2,306,108; 2,375,963; and 4,270,814 and in U.K. Patent No. 433,455. Described polyhalide particles are herapathite crystals formed by reaction of quinine bisulfate, iodine, and hydrogen iodide. Salts of other members of the quinine alkaloid family also form light-polarizing polyiodies by reaction, e.g., of cinchonidine bisulfate with iodine and hydrogen iodide. Furthermore, polyhalides such as polyiodides, polychlorides and polybromides can be formed by reaction of pyrazine or pyridine carboxylic acid, hydrogen halide acid and/or alkali metal or alkaline earth metal halide with elemental iodine, chlorine, or bromine. A polyhalide is a complex of halide atoms and an inorganic or organic matrix. Methods for the manufacture of light-polarizing particles are described in detail in U.S. Patent No. 4,422,963 which discloses the use of polymeric materials such as nitrocellulose for uniform particle size and improved dispersion in a suspending medium. Since nitrocellulose is compatible with the polymeric matrix material, particles treated with nitrocellulose are not segregated to the microdroplets but may remain in the polymeric matrix. In accordance with an aspect of the invention, this drawback is overcome by use of a polymeric dispersant, e.g., poly(acrylic acid) or poly(2-hydroxyethyl methacrylate), which is incompatible or partially compatible with the polymeric matrix material. Particles treated with nitrocellulose can be segregated to the microdroplets by adding A-B type block copolymer. This copolymer has to be soluble in the liquid suspending medium, incompatible or partially compatible with the polymeric matrix material, and inert with respect to the suspended particles and the suspending medium. The conductivity and viscosity of the liquid suspension should remain limited. In the present invention, preferred size of the light-polarizing particles is less than 1 µm and preferably in a range from 0.1 to 0.3 µm, and the particles should be shaped like needles, laths, rods, or plates. When particle size is greater than 1 µm, a film may not be transparent even in the presence of a field, due to the electro-dichroic effect of particles in the polymeric matrix.

The polymeric stabilizer used in the present invention is A-B type block copolymer. This copolymer has to be soluble in the liquid suspending medium, and to be incompatible or at most partially compatible with the polymeric matrix. The copolymer must be inert with respect to the suspended particles and the suspending medium, and its inclusion should not result in an overly conductive or viscous suspension. The A-B type copolymers used in the present invention comprise a solvating or solubilizing component and an anchoring component, wherein the solvating or B-component of the block polymer is an organic group having sufficient branching to impart solubility, and wherein the second or A-segment of the block copolymer anchors to the surface of the light-polarizing particles or to another polymer on the surface of the particles. These requirements are satisfied by an A-B type block copolymer such as poly(neopentyl methacrylate-block-hydroxyethyl methacrylate), poly(neopentyl methacrylate-block-styrene), or poly(acrylonitrile-block-styrene). Block copolymers are described in "Block Copolymers - Overview and Critical Survey", A. Noshay et al., Academic Press, New York, 1977, pp. 83-163 and in "Block and Graft Polymers", W.J. Burlant et al., Reinhold Publishing Corp., New York, 1960. In the present invention, the amount of the A-B-type block copolymer in the liquid polarizing suspension is below 10 wt.% and preferably in the range from 2 to 5 wt.%. Higher A-B block copolymer contents than specified here result in inordinately slow response and, when an applied field is weak, in inadequate transparency of the film. Also suitable as dispersant materials are oil-soluble phosphate salts of alkyl amines.

Suitable liquid suspending media are described in U.S. Patent Nos. 1,961,664; 2,290,582; 3,625,869; 4,247,175; and 4,442,019. Described there are a number of liquid suspension media, e.g., esters, oils, aromatic alcohols, and aromatic esters for suspending particles in light valves. In accordance with an aspect of the invention, the liquid suspending medium has to be incompatible or at most partially compatible with the polymeric matrix, and to be inert with respect to the suspended particles and the polymeric stabilizer. Also, the difference of refractive index between suspending medium and a polymeric matrix must not exceed 0.02. The suspending medium in the present invention is a plasticizer such as a phthalate (dioctyl phthalate, dibutyl phthalate, diisooctyl phthalate, butyloctyl phthalate), an isophthalate (dioctyl isophthalate), an oleate (butyl oleate, n-propyl oleate, etc.), an adipate (dioctyl adipate, etc.), or a benzoate (diethyl glycol dibenzoate, etc.). Plasticizers are described in "The Technology of Plasticizers", J.K. Sears et al., John Wiley & Sons, New York, 1982, pp. 966-1077. Table 1 shows properties and polymeric compatibilities of typical plasticizers used in the present invention.

Uniform liquid-suspension droplets in a polymeric matrix can be formed by various phase-separation processes, e.g., by polymerization, by thermal processing, by solvent evaporation, by an emulsifying method. Each of these involves the formation of a homogeneous solution of a polymer or pre-polymer with a liquids suspension, followed by phase separation, droplet formation, and, finally, polymer gelation or solidification. Phase-separation processing can be applied to a broad range of polymers, including thermoplastic and thermosetting resins. These methods are simple, and their use can reduce fabrication costs in display or window applications. They are applicable not only to liquid-suspension, polymer-matrix systems, but also to liquid-crystal, polymer-matrix systems for making a light valve. Commercialization of the latter has met with practical difficulties, however.

In accordance with an aspect of the present invention, films for a light valve comprise micron-size droplets and/or an interconnected structure of a liquid suspension, dispersed in a polymeric matrix. Preferred manufacture comprises a phase-separation process, e.g., polymerization, thermal processing, or solvent evaporation. The droplets are made of a liquid polarizing suspension, not of liquids crystal. In the absence of an applied voltage, the light valve appears dark blue, not because of light scattering, but because of light absorption by the particles.

A preferred first fabrication method of films of the invention involves phase separation by solvent evaporation and includes the following steps:
1. The polymer is dissolved in a common solvent.
2. The resulting solution is mixed with the liquid suspension to form a homogeneous solution.
3. A PET- or glass TCO-substrate is coated with the resulting solution by doctor-blading or roll coating. The thickness of the wet coating is 10 to 300 µm.
4. The solvent is evaporated in a clean environment at room temperature or at 50 to 90 ° C.
5. A second conductive substrate is adhered to the resulting film, under pressure and heat.

The refractive index of the polymerix matrix used in he present invention is about from 1.46 to 1.50. The polymeric matrix is incompatible or partially compatible with the suspending medium, and is a polymeric resin, e.g., poly(vinylbutyral), poly(vinylacetate), poly(methylmethacrylate), or cellulose acetate. Table 2 shows properties and solvents of the polymeric matrix.

Solvents of the polymeric matrix used in the present invention are esters (isoamyl acetate, benzyl acetate, ethyl acetate, and methyl acetate) and aromatic hydrocarbons xylene and toluene). These solvents are described in "Polymer Handbook", 3rd ed., J. Brandrup et al., John Wiley & Sons, VII/379-VII/403, 1989.

For phase separation by solvent evaporation, preferred thermoplastic resins are soluble in a solvent, or mixture of solvents, with which the liquid polarizing suspension is miscible. Solvent evaporation is useful for resins whose transition temperature is so high that the liquid polarizing suspension is degraded at temperatures higher than the transition temperature. In the present invention, the liquid polarizing suspension and a resin, e.g., poly(vinyl butyral), poly(vinyl acetate), poly(methyl methacrylate), or cellulose acetate, are dissolved in a common solvent forming a homogeneous solution. The liquid polarizing suspension comprises a liquid suspending medium which is incompatible or partially compatible with the polymeric matrix, and whose refractive index closely matches the refractive index of the polymerix matrix. The solution is coated onto a substrate of a transparent conductive glass or PET-film by doctor-blading or roller coating. The solvent is removed by evaporation in a clean environment at room temperature or at 50 to 90° C, resulting in phase separation and polymer solidification. The resulting film has droplets and/or interconnected structure of the suspension dispersed in a polymeric matrix. Droplet size, shape, and interconnected structure depend on the rate of solvent removal, the rate of diffusion, the relative concentration of the suspension in the solution, the types of suspending medium and polymer used, the degree of compatibility of the polymer and the suspending medium, and on physical parameters such as viscosity.

A preferred second fabrication method for films of the invention involves phase separation by polymerization. This method is particularly useful if a pre-polymer material is miscible with the liquid polarizing suspension. A homogeneous solution is prepared by mixing the pre-polymer with the liquid polarizing suspension. Polymerization is effected by a condensation reaction, e.g., with a thermosetting resin such as epoxy, silicone, or urethane, for example; by free-radical polymerization, as with vinyl or acrylic monomers such as methyl methacrylate or vinyl acetate, catalyzed with a free-radical initiator such as benzoylperoxide; or by photo-initiated polymerization. The solubility of the liquid polarizing suspension decreases as polymer chains grow longer, until the liquid-polarizing-suspension phase separates, forming droplets. The size of droplets and/or interconnected structure of the suspension dispersed in a polymeric matrix, and the film morphology are established in the time interval between droplet nucleation and gelation of the polymer. Droplet size depends on the rate of polymerization, the rate of diffusion, the solubility of the liquid polarizing suspension and the polymer, the types of suspending medium and polymer used, and by physical parameters such as viscosity.

A preferred third fabrication method for films in accordance with the present invention involves phase separation by thermal processing. This method is particularly useful for thermoplastic resins which melt below their decomposition temperature. A binary mixture of a polymer and a liquid polarizing suspension forms a homogeneous solution at elevated temperature. Cooling the homogeneous solution into the miscibility gap causes phase separation of the liquid polarizing suspension. Droplet size of the liquid polarizing suspension is governed by the rate of cooling and depends on a number of material parameters, e.g., viscosity and chemical potential.

The present invention is applicable for films capable of controlling the transmittance of solar radiation by an electric field. The operating principle of such films is based on electric-field alignment of light-polarizing particles in droplets dispersed in the polymeric matrix. An AC-voltage is preferred for activating the film. In the present invention, higher transmission and better contrast are achieved on account of matching of the refractive indices of a suspending medium and a polymeric matrix. Incident light which encounters and effective refractive index difference between the polymeric matrix and the suspending medium is scattered; light which encounters no such difference is transmitted. Typical operating voltage and frequency ranges for films of the invention are from 30 to 300 volts RMS and 30 to 1000 hertz, respectively. Typically, the decay time is about several tens of milliseconds, and the rise time is about one-fifth to one-half of the decay time. Light valves of the invention have excellent stability in a cycle test of 2 x 10⁵ cycles, and they can withstand a temperature of 85° C for at least 1000 hours without significant degradation of properties.

Many types of conductive coatings and overcoatings can be incorporated into light valves including films of the present invention. To isolate the conductive coating, an overcoating 200 to 1000 Å thick can be deposited on one or both of the conductive coatings.

In the absence of an AC-voltage applied to the film, particles in microdroplets and/or an interconnected structure of the liquid polarizing suspension exhibit random Brownian motion, and the film is dark blue due to the electro-dichroic effect of polarizing particles. When an AC-voltage is applied across the film, the particles in the liquid polarizing suspension become aligned parallel to the electric field, and, when the refractive indices of a polymeric matrix and the suspension are matched, the film becomes transparent. Such films are less prone to difficulties in filling or pouring the liquid suspension to a cell, agglomeration of particles in suspension, leaking of the suspension due to failure of a seal, and unequal response time and optical density due to a voltage drop from an edge to the middle of a TCO-substrate. Light valves comprising a liquid crystal are milky translucent in the absence of an applied voltage. Their light scattering properties detract from their aesthetic appeal and thus limit their applicability to displays and windows. Furthermore, the liquid crystal partially interacts with the polymeric matrix, as a plasticizer and a mixture of several liquid-crystal materials is used. As a result, in the presence of an applied field, the transparent state remains milky because of a difference between the refractive indices of the liquid crystal and the polymeric matrix. Moreover, since liquid-crystal materials are affected by UV-radiation, a UV-blocking filter or UV-absorbing additive is necessary. Specifically with respect to nematic liquid-crystal materials, their applicability is limited because of temperature sensitivity. By the present invention, on the other hand, these difficulties are alleviated.

The present invention provides a film of liquid suspension dispersed in a polymeric matrix which is conveniently fabricated and which does not suffer from sealing difficulties as in a conventional light valve. Formation of uniform liquid suspension droplets in a polymeric matrix is achieved by phase-separation processing, e.g., by polymerization, thermal processing, or solvent evaporation. Advantageously, use of these simple, inexpensive, one-step methods results in cost reduction in the fabrication of displays and windows.

Films of the present invention can be used for a large variety of applications, e.g., in automobile display devices, automobile windshields, automobile rear-view mirrors, window for buildings, sunglasses, optical shutters, and flat-panel display devices.

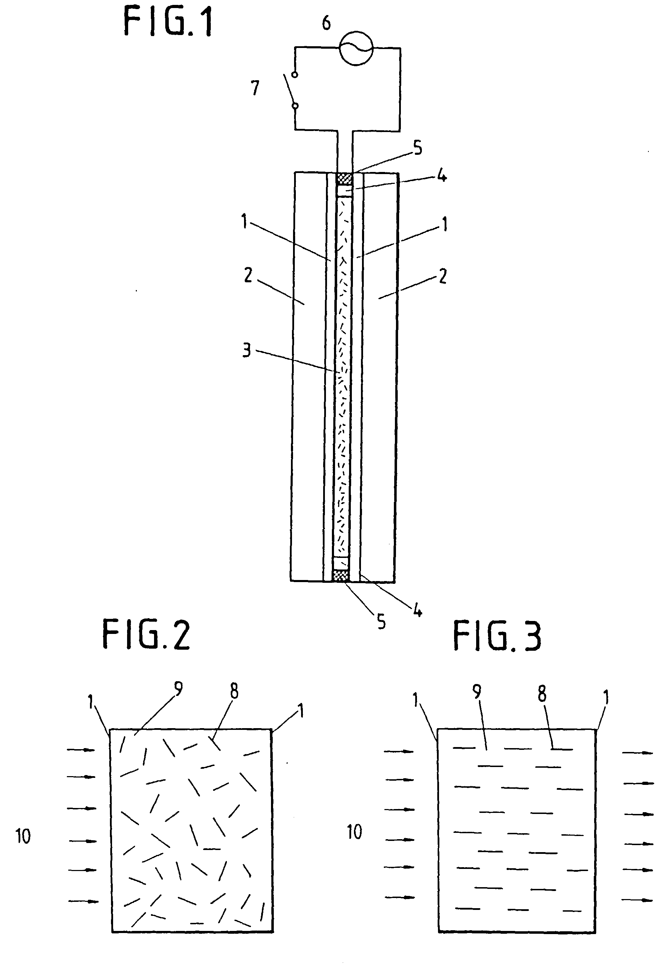

With reference to Fig. 1, a prior-art light valve includes two glass substrates 2, each with a transparent conductive coating 1 on its inner surface. The glass substrates 2 are separated by a spacer 4, and a sealing material 5 is provided for sealing the edges of the glass substrates to form a chamber for the light-polarizing suspension 3. The conductive coating 1 is connected to an AC-power supply 6 via a switch.

Fig. 2 shows the closed or opaque state of the prior-art light valve. Tiny rod-shaped particles 8 are in random orientation in the suspending medium 9. A beam of light 10 impinging on the light valve is substantially cut off by absorption, reflection, and/or scattering.

Fig. 3 shows the open or transparent state of the prior-art light valve. An electric field between the conductive coatings aligns the particles 8, and the light beam 10 passes through the cell.

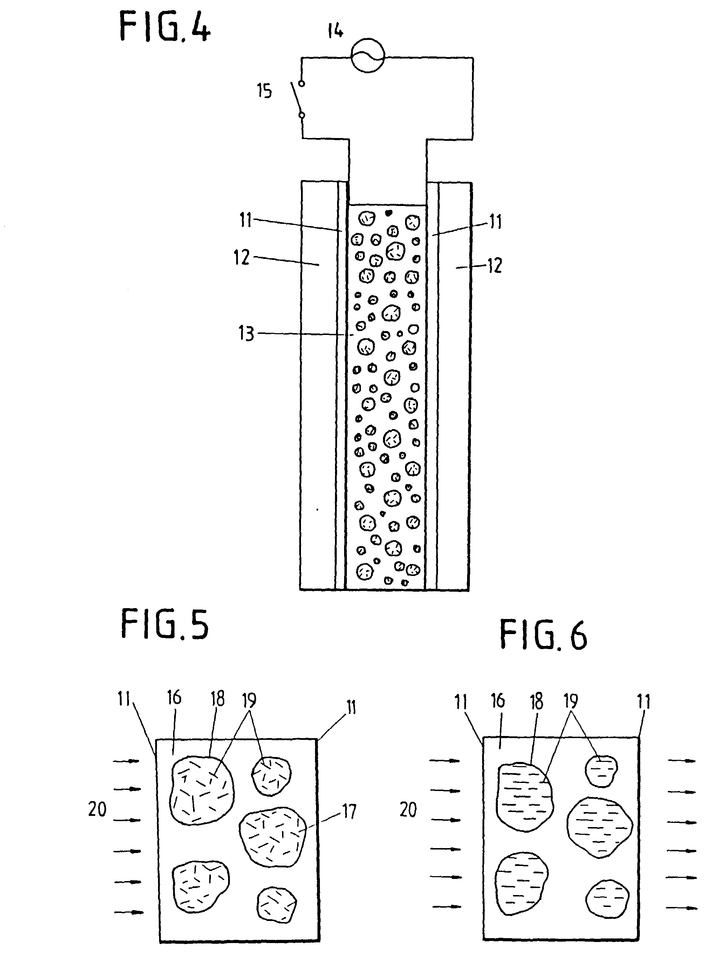

Fig. 4, 5 and 6 relate to a light valve of the present invention, including a film 13 containing microdroplets 18 of the liquid polarizing suspension dispersed in the polymeric matrix 16. This light valve contains a film sandwiched between two glass substrates 12 with transparent conductive coatings 11 on their inner faces.

Fig. 5 schematically shows the closed or opaque state of a light valve of the present invention, comprising microdroplets 18 of the liquid suspension dispersed in a polymeric matrix 16. Tiny rod-shaped particles 19 are oriented at random in the suspending medium 17. A beam of light 20 impinging on the light valve is substantially cut off by absorption, reflection, and/or scattering.

Fig. 6 shows the open or transparent state of the light valve of the present invention, comprising microdroplets 18 of the liquid suspension dispersed in a polymeric matrix 16. Here, in the presence of an applied electric field, the particles 19 are aligned and the light beam 20 passes through the cell.

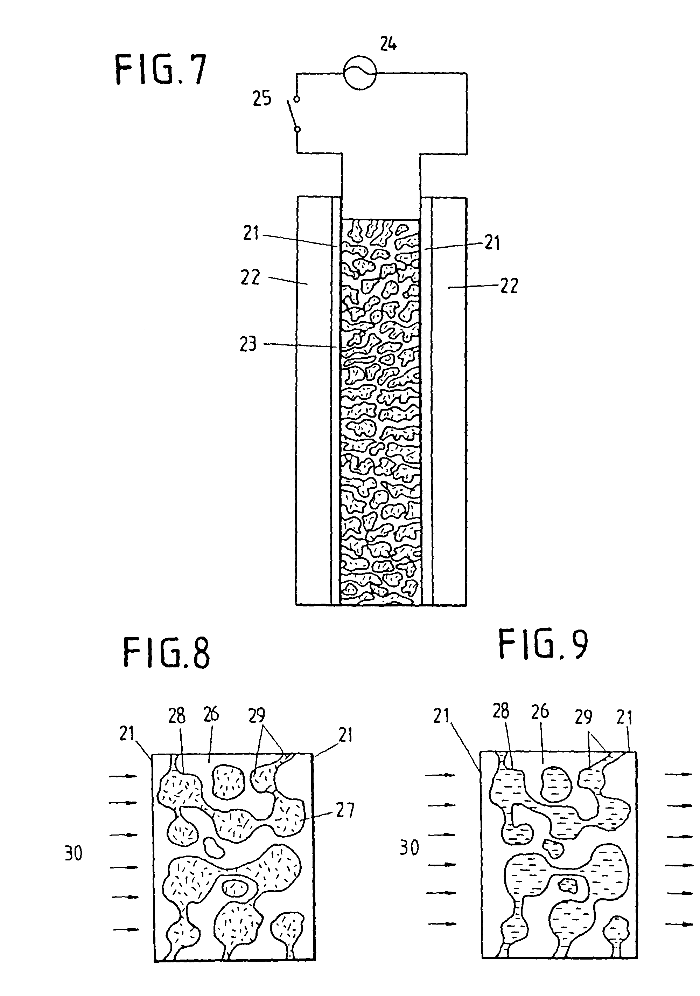

Fig. 7, 8 and 9 relate to another light valve of the present invention, comprising a film 23 with interconnected structure 28 of droplets of the liquid suspension dispersed in a polymeric matrix. This light valve includes a film sandwiched between two glass substrates 22 having transparent conductive coatings 21 on their inner faces.

Fig. 8 schematically shows the closed, opaque state of the light valve of Fig. 7, comprising an interconnected structure 28 of droplets of the liquid suspension dispersed in a polymeric matrix 26. Tiny rod-shaped particles 29 are oriented at random in the suspending medium 28. A beam of light 30 impinging on the light valve is substantially cut off due to absorption, reflection, and scattering.

Fig. 9 shows the open, transparent state of the light valve of Fig. 7, comprising an interconnected structure 28 of droplets of the liquid suspension dispersed in a polymeric matrix 26. Here, in the presence of an applied electric fields, the particles 29 are aligned, and the beam passes through the cell.

Example 1. An amount of 10 grams of a polymeric resin was dissolved in 40 grams of a solvent, and 5 grams of a liquid polarizing suspension was added which consisted of 20 wt.% particles, 15 wt.% polymeric dispersant, and 65 wt.% suspending medium. The combination was mixed by mechanical stirring for 30 minutes and by ultrasonic agitation for 2 hours. The mixture was degassed, to form a stable emulsion.

The emulsion was cast on a PET or glass substrate which had been pre-coated with a 200-µm layer of a transparent-conductive-oxide electrode (TCO-substrate). A doctor blade was used to cast the emulsion onto the electrode on the PET-substrate, 10 to 200 µm thick.

The film was dried at room temperature or 50 to 90°C, resulting in phase separation and polymer solidification. After complete drying, the film was 50 µm thick and had droplets and/or interconnected structure of the suspension dispersed in a polymeric matrix. A finished cell was obtained by laminating to a second TCO-substrate.

Example 2. Example 1 was followed, except that the amount of the liquid polarizing suspension was increased to 6 to 10 grams. In this film with increased suspension content, the film had an interconnected structure of the suspension in the polymeric matrix.

Examples 3-5. Example 1 was followed, with light-polarizing particles dihydrocinchonidine sulfate, pyrazine-2,5-dicarboxylic acid polycalcium iodide and herapathite. These particles have high electrical conductivity and resistance to UV-light. Their size does not exceed 1 um, and they have the shape of needles, laths, rods, or plates.

Examples 6-8. Example 1 was followed, with respective polymeric dispersants poly(neopentyl methacrylate-block-hydroxyethyl methacrylate), poly(acrylonitrile-block-styrene), and poly(neopentyl methacrylate-block-styrene).

Example 9. Example 1 was followed, with poly(methyl methacrylate) as polymeric matrix material and with dioctyl isophthalate plasticizer as the suspending medium.

Examples 10-12. Example 9 was followed, with phthalic acid derivatives such as dicapryl phthalate, butyl octyl phthalate, and diisodecyl phthalate as liquid suspending media.

Examples 13-16. Example 9 was followed, with methyl methacrylate, toluene, xylene, and isoamyl acetate as solvents for the polymeric matrix.

Example 17. Example 1 was followed, with poly(vinyl butyral) as polymeric matrix material and trioctyl trimellitate as the liquid suspending medium.

Examples 18-21. Example 17 was followed with dioctyl phthalate, butyl octyl phthalate, dioctyl adipate and methyl oleate as liquid suspending media.

Examples 22-24. Example 17 was followed, with methyl benzoate, toluene and xylene as solvents for the polymeric matrix material.

Example 25. Example 1 was followed, with poly(vinyl acetate) as polymeric matrix material and dioctyl adipate as liquid suspending medium.

Examples 26 and 27. Example 25 was followed, with dioctyl phthalate and dioctyl isophthalate as liquid suspending media.

Examples 28 and 29. Example 25 was followed, with toluene and xylene as respective polymeric matrix materials.

Example 30. An emulsion was prepared by mixing 0.5 gram epoxy resin and 0.5 gram hardener with 0.5 gram liquid polarizing suspension of Example 1. The emulsion was cast on a PET or glass substrate which had been pre-coated with a TCO-layer, and laminated to a second TCO-substrate. The film was cured at 50 to 100° C.

Example 31. Example 30 was followed, except that silicone resin was used as polymeric matrix material.

Example 32. An amount of 10 to 50 grams plasticizer compatible with the polymeric matrix was added to 100 grams of polymeric matrix material, and a homogeneous melt was formed at 80° C. The solution was mixed with the liquid polarizing suspension of Example 1. The mixture was cast on a PET or glass substrate which had been pre-coated with a TCO-layer and cooled at a rate of 5 to 10° C per minute. The resulting film had liquid polarizing suspension droplets and/or interconnected structure of suspension in a polymeric matrix. A finished cell was made by lamination to a second TCO-substrate.

Example 33. Example 32 was repeated, with the content of liquid polarizing suspension increased to 51 to 100 grams in the mixture of example 1 above. As a result of the increase, an interconnected structure of the suspension dispersed in the polymeric matrix was obtained.

Example 34. Example 32 was followed, with poly(vinyl butyral) as polymeric matrix material, diisobutyl phthalate as compatible plasticizer, and butyloctyl phthalate as suspending medium.

Examples 35 and 36. Example 34 was followed, with dioctyl phthalate and diisooctyl phthalate as liquid suspending media.

**Table 1.**

| Properties and Polymer Compatibility of Plasticizers Used in the Present Invention. | | | | | | | | | | | |
|---|---|---|---|---|---|---|---|---|---|---|---|
| | Mol. Weight | Density (g/cm²) | refractive Index | bp (°C) | PMMA | PVB | PVAc | CA | CAB | CN | EC |
| | | | | Tm(°C) | | | | | | | |
| Dioctyl phthalate | 390 | 0.983 (25 °C) | 1.485 (25 °C) | 231 ( 5mm) | C | P | I | I | C | C | C |
| | | | | -46 | | | | | | | |
| Butyl octyl phthalate | 334 | 0.993 (25 °C) | 1.485 (25° C) | 340 (740mm) | P | P | I | I | P | C | C |
| | | | | <-50 | | | | | | | |
| Diisooctyl phthalate | 390 | 0.985 (23 °C) | 1.485 (23 °C) | 228-239 (5mm) | C | P | C | I | C | C | C |
| | | | | -50 | | | | | | | |
| Dioctyl isophthalate | 391 | 0.984 (20 °C) | 1.4875 (20 °C) | 241 (5mm) | P | C | I | I | C | C | C |
| | | | | -46 | | | | | | | |
| Methyl oleate | 296 | 0.875 (25 °C) | 1.4505 (25 °C) | 167-170 ( 2mm) | P | P | P | I | P | C | C |
| | | | | -16 | | | | | | | |
| Methyl ricinoleate | 310 | 0.925 (25 °C) | 1.4620 (25 °C) | 170 (1mm) | P | C | C | P | C | C | C |
| | | | | -30 | | | | | | | |
| Diisooctyl azelate | 413 | 0.92 (25 °C) | 1.450 (25 °C) | 225-244 (4mm) | - | I | P | C | C | C | C |
| | | | | -68 | | | | | | | |
| Diethylene glycol dibenzoate | 314 | 1.178 (25 °C) | 1.5424 (25 °C) | 230-242 (5mm) | C | C | C | P | C | C | C |
| | | | | 16. 28 | | | | | | | |
| Epoxidized soybean oil | 1000 | 1.02 (25 °C) | 1.4720 (25 °C) | | I | I | I | I | P | C | C |
| | | | | -4 | | | | | | | |
| Dioctyl adipate | 371 | 0.927 (20 °C) | 1.446 | 214 (5mm) | P | P | P | P | C | C | C |
| | | | | -70 | | | | | | | |
| Trioctyl trimellitate | 547 | 0.989 (20 °C) | 1.4832 (23 °C) | 260 (1mm) | C | P | - | - | C | C | C |
| | | | | -38 | | | | | | | |
| C: compatible P: partially compatible I: incompatible | | | | | | | | | | | |

**Table 2.**

| Properties and Solvents of the Polymeric Matrix. | | | | |
|---|---|---|---|---|
| Properties Polymer | refractive Index | Tm (°C) | Density (g/cm²) | Solvents |
| PMMA | 1.490 (20 °C) | 180 | 1.19 | benzene, toluene, xylene, chloroform, isobutanol, dioxane, MEK, cyclohexanone acetic acid, formic acid, ethyl acetate, isoamyl acetate, nitroethane, etc. |
| PVB | 1.485 | 51 (Tg) | 1.08 | acetone, methylbenzoate, isopropanol, MEK, THF methylene chloride, etc. |
| PVAc | 1.466 | 30 (Tg) | 1.1 | benzene, tuolene, chloroform, carbon tetrachloride methanol, ethanol, benzyl alcohol, THF, xylene acetone, acetic acid, isoamyl acetate, benzyl acetate, DMF, DMSO, etc. |
| Cellulose acetate | 1.475 (20 °C) | 240 | 1.31 | water, methyl acetate methanol, acetic acid, phenols, benzyl alcohol, dioxane , pyridine, aniline acetone, cyclohexanone, formic acid, acetic acid, methyl acetate, ethyl acetate, etc. |

## Claims

1. A film (13) for a light valve,
comprising:
(I) a polymeric matrix (16; 26),
and
(II) a liquid suspension, which comprises:
- a liquid suspending medium (17; 27) which is only partially compatible or incompatible with the polymeric matrix (16; 26) and has a refractive index differing by at most 0.02 from that of the polymeric matrix,
- a polymeric stabilizer or dispersing agent dissolved in the liquid suspending medium (17; 27), and
- suspended non-liquid crystalline light-polarizing particles (19; 29) of a size of < 1 µm,
and which is dispersed in the polymeric matrix (16; 26) in the form of independent microdroplets (18) and/or in the form of an interconnected microdroplet structure (28), wherein the microdroplets and/or microdroplet structure is generated by phase separation.

2. The film (13) according to claim 1, characterized in that the polymeric matrix (16; 26) is made of a polymer resin.

3. The film (13) according to claim 2, characterized in that the polymeric matrix (16; 26) is made of a polymer of vinyl or acrylic monomers, or of an epoxy, silicone or urethane resin.

4. The film (13) according to claim 2 and/or 3,
characterized in that the polymeric matrix (16; 26) is made of poly(methyl methacrylate), poly(vinylbutyral), poly(vinyl acetate) or cellulose acetate.

5. The film (13) according to any of claims 1 to 4, characterized in that the liquid suspending medium (17; 27) is selected from esters, oils, aromatic alcohols and aromatic esters.

6. The film (13) according to any of claims 1 to 5, characterized in that the liquid suspending medium (17, 27) is selected from fluorocopolymers and plasticizers, such as phthalates and isophthalates, oleates, adipates, benzoates and trioctyl trimellitate.

7. The film (13) according to any of claims 1 to 6, characterized in that the polymeric stabilizer or dispersing agent is selected from poly(acrylic acid), poly(2-hydroxyethyl methacrylate), acrylic copolymers, and A-B type block copolymers comprising an anchoring component (A) anchoring to the surface of the light-polarizing particles (19; 29) or to another polymer on the surface of the light-polarizing particles (19; 29), and a solvating or solubilizing component (B), selected from poly(neopentyl methacrylate-block-hydroxyethyl methacrylate),
poly(neopentyl methacrylate-block-styrene), and poly(acrylonitrile-block-styrene).

8. The film (13) according to any of claims 1 to 7, characterized in that, in the liquid suspension,
- the amount of light-polarizing particles (19; 29) is 1 to 20 % b.w.,
- the amount of the polymeric stabilizer or dispersing agent is 1 to 20 % b.w., and in the case of A-B type block copolymers < 10 % b.w.,
and
- the amount of the suspending medium (17, 27) is 60 to 98 % b.w. .

9. The film (13) according to any of claims 1 to 8, characterized in that the light-polarizing particles (19, 29) are polyhalide particles.

10. A method for the preparation of the film (13) according to any of claims 1 to 9, comprising the steps of:
(1) dissolving the polymer resin provided for the polymeric matrix (16; 26) in a solvent;
(2) preparing a suspension of the light-polarizing particles (19; 29) in a liquid suspending medium (17; 27) which is only partially compatible or incompatible with the polymer resin of the polymeric matrix (16; 26) comprising the polymeric stabilizer or dispersing agent,
(3) mixing the solution of the polymer resin obtained in step (1) with the suspension obtained in step (2) to form a homogeneous solution comprising the dispersed light-polarizing particles,
(4) coating the homogeneous solution on a substrate in the form of a film,
and
(5) phase separation of the polymeric matrix phase and the liquid suspension phase and solidification or polymer gelation.

11. The method according to claim 10, characterized in that in step (5) solvent evaporation from the polymeric matrix phase, thermal processing or emulsification are applied.

12. A method for the preparation of the film (13) according to any of claims 1 to 9, comprising the steps of:
(1) dissolving the monomer or prepolymer of the polymer resin provided for the polymeric matrix (16; 26) in a solvent;
(2) preparing a suspension of the light-polarizing particles (19; 29) in a liquid suspending medium (17; 27) which is only partially compatible or incompatible with the polymer resin of the polymeric matrix (16; 26) comprising the polymeric stabilizer or dispersing agent,
(3) mixing the solution obtained in step (1) with the suspension obtained in step (2) to form a homogeneous solution comprising the dispersed light-polarizing particles,
(4) coating the homogeneous solution on a substrate in the form of a film,
and
(5) phase separation and solidification or forming a polymer gel by polymerization of the monomers or prepolymers.

13. The method according to any of claims 10 to 12, characterized in that in step (3), the mixed solution is prepared at an elevated temperature, and in step (5), the homogeneous solution is cooled into a miscibility gap, thereby causing phase separation.

14. The method according to any of claims 10 to 13, characterized in that the solvent used in step (1) is selected from
- water;
- esters, such as methyl acetate, ethyl acetate, isoamyl acetate, benzyl acetate, and methyl benzoate;
- aromatic hydrocarbons, such as benzene, xylene, toluene;
- acetone, methyl ethyl ketone (MEK), and cyclohexanone;
- formic acid and acetic acid;
- methylene chloride, chloroform and carbon tetrachloride;
- methanol, ethanol, isopropanol, isobutanol, benzyl alcohol;
- dioxane and tetrahydrofuran (THF);
- phenols;
- nitroethane;
- dimethyl formamide (DMF);
- dimethyl sulfoxide (DMSO);
- pyridine, and
- aniline.

15. The method according to any of claims 10 to 14, characterized in that in step (4), the solution comprising the light-polarizing particles is coated on a conductive substrate, or a substrate made of glass or a PET film.

16. The method according to any of claims 10 to 15, a TCO electrode substrate is used in step (4).

17. Use of the films according to any of claims 1 to 9 in automobile display devices, automobile windshields, automobile rear-view mirrors, windows for buildings, sunglasses, optical shutters and flatpanel display devices.

18. Optical shutters, comprising one or more films according to any of claims 1 to 9.

## Patentansprüche

1. Film (13) für Lichtventile,
der aufweist:
(I) eine Polymermatrix (16; 26)
und
(II) eine flüssige Suspension, die enthält:
- ein flüssiges Suspendiermedium (17; 27), das mit der Polymermatrix (16; 26) nur teilweise kompatibel oder nicht kompatibel ist und einen Brechungsindex aufweist, der um höchstens 0,02 vom Brechungsindex der Polymermatrix verschieden ist,
- ein polymeres Stabilisierungsmittel oder Dispergiermittel, das im flüssigen Suspendiermedium (17; 27) gelöst ist, und
- suspendierte nicht flüssigkristalline, Licht polarisierende Partikel (19; 29) einer Größe < 1 µm,
und die in Form unabhängiger Mikrotröpfchen (18) und/oder in Form einer Mikrotröpfchenstruktur (28) miteinander verbundener Mikrotröpfchen in der Polymermatrix (16; 26) dispergiert ist, wobei die Mikrotröpfchen und/oder die Mikrotröpfchenstruktur durch Phasentrennung erzeugt ist.

2. Film (13) nach Anspruch 1, dadurch gekennzeichnet, daß die Polymermatrix (16; 26) aus einem Polymerharz besteht.

3. Film (13) nach Anspruch 2, dadurch gekennzeichnet, daß die Polymermatrix (16; 26) aus einem Polymer von Vinyl- oder Acryl-Monomeren oder einem Epoxyharz, einem Siliconharz oder einem Urethanharz besteht.

4. Film (13) nach Anspruch 2 und/oder 3, dadurch gekennzeichnet, daß die Polymermatrix (16; 26) aus Poly(methylmethacrylat), Poly(vinylbutyral), Poly(vinylacetat) oder Celluloseacetat besteht.

5. Film (13) nach einem der Ansprüche 1 bis 4, dadurch gekennzeichnet, daß das flüssige Suspendiermedium (17; 27) unter Estern, Ölen, aromatischen Alkoholen und aromatischen Estern ausgewählt ist.

6. Film (13) nach einem der Ansprüche 1 bis 5, dadurch gekennzeichnet, daß das flüssige Suspendiermedium (17; 27) unter Fluor-Copolymeren und Weichmachern, wie Phthalaten und Isophthalaten, Oleaten, Adipaten, Benzoaten und Trioctyltrimellitat, ausgewählt ist.

7. Film (13) nach einem der Ansprüche 1 bis 6, dadurch gekennzeichnet, daß das polymere Stabilisierungsmittel oder Dispergiermittel unter Poly(acrylsäure), Poly(2-hydroxyethylmethacrylat), Acrylsäure-Copolymeren und Blockcopolymeren vom Typ A-B ausgewählt ist, die eine Verankerungskomponente (A), die sich an der Oberfläche der Licht polarisierenden Partikel (19; 29) oder einem anderen Polymer an der Oberfläche der Licht polarisierenden Partikel (19; 29) verankern, und eine solvatisierende oder solubilisierende Komponente (B) enthalten und ausgewählt sind unter Poly(neopentylmethacrylat-block-hydroxyethylmethacrylat), Poly(neopentylmethacrylat-block-styrol) und Poly(acrylnitril-blockstyrol).

8. Film (13) nach einem der Ansprüche 1 bis 7, dadurch gekennzeichnet, daß in der flüssigen Suspension
- die Menge der Licht polarisierenden Partikel (19; 29) 1 bis 20 Gew.-%,
- die Menge des polymeren Stabilisierungsmittels oder Dispergiermittels 1 bis 20 Gew.-% und im Fall von Blockcopolymeren vom Typ A-B < 10 Gew.-%
und
- die Menge des Suspendiermediums (17; 27) 60 bis 98 Gew.-%
betragen.

9. Film (13) nach einem der Ansprüche 1 bis 8, dadurch gekennzeichnet, daß die Licht polarisierenden Partikel (19; 29) Polyhalogenidpartikel sind.

10. Verfahren zur Herstellung der Filme (13) nach einem der Ansprüche 1 bis 9, das folgende Schritte umfaßt:
(1) Lösen des für die Polymermatrix (16; 26) vorgesehenen Polymerharzes in einem Lösungsmittel;
(2) Herstellung einer Suspension der Licht polarisierenden Partikel (19; 29) in einem flüssigen Suspendiermedium (17; 27), das mit dem Polymerharz der Polymermatrix (16; 26) nur teilweise kompatibel oder nicht kompatibel ist und das polymere Stabilisierungsmittel oder Dispergiermittel enthält,
(3) Mischen der in Schritt (1) erhaltenen Lösung des Polymerharzes mit der in Schritt (2) erhaltenen Suspension unter Erhalt einer homogenen Lösung, die dispergierte Licht polarisierende Partikel enthält,
(4) Erzeugen eines Films durch Beschichtung eines Substrats mit der homogenen Lösung
und
(5) Phasentrennung der Polymermatrixphase und der flüssigen Suspensionsphase und Verfestigung oder Überführung des Polymers in den Gelzustand.

11. Verfahren nach Anspruch 10, dadurch gekennzeichnet, daß in Schritt (5) das Lösungsmittel aus der Polymermatrixphase abgedampft wird, ein thermischer Verfahrensschritt angewandt wird oder in eine Emulsion übergeführt wird.

12. Verfahren zur Herstellung des Films (13) nach einem der Ansprüche 1 bis 9, das folgende Schritte umfaßt:
(1) Lösen des Monomers oder eines Prepolymers des für die Polymermatrix (16; 26) vorgesehenen Polymerharzes in einem Lösungsmittel;
(2) Herstellung einer Suspension der Licht polarisierenden Partikel (19; 29) in einem flüssigen Suspendiermedium (17; 27), das mit dem Polymerharz der Polymermatrix (16; 26) nur teilweise kompatibel oder nicht kompatibel ist und das polymere Stabilisierungsmittel oder Dispergiermittel enthält,
(3) Mischen der in Schritt (1) erhaltenen Lösung mit der in Schritt (2) erhaltenen Suspension unter Erhalt einer homogenen Lösung, die dispergierte Licht polarisierende Partikel enthält,
(4) Erzeugen eines Films durch Beschichtung eines Substrats mit der homogenen Lösung
und
(5) Phasentrennung und Verfestigung oder Erzeugung eines Polymergels durch Polymerisation der Monomeren oder Prepolymeren.

13. Verfahren nach einem der Ansprüche 10 bis 12, dadurch gekennzeichnet, daß in Schritt (3) die gemischte Lösung bei erhöhter Temperatur hergestellt wird und in Schritt (5) die homogene Lösung durch Abkühlung in eine Mischungslücke gebracht wird, wodurch Phasentrennung hervorgerufen wird.

14. Verfahren nach einem der Ansprüche 10 bis 13, dadurch gekennzeichnet, daß das in Schritt (1) verwendete Lösungsmittel ausgewählt ist unter
- Wasser;
- Estern, wie Methylacetat, Ethylacetat, Isoamyl acetat, Benzylacetat und Methylbenzoat;
- aromatischen Kohlenwasserstoffen, wie Benzol, Xylol und Toluol;
- Aceton, Methylethylketon (MEK) und Cyclohexanon;
- Ameisensäure und Essigsäure;
- Methylenchlorid, Chloroform und Tetrachlorkohlenstoff;
- Methanol, Ethanol, Isopropanol, Isobutanol und Benzylalkohol;
- Dioxan und Tetrahydrofuran (THF);
- Phenolen;
- Nitroethan;
- Dimethylformamid (DMF);
- Dimethylsulfoxid (DMSO) ;
- Pyridin sowie
- Anilin.

15. Verfahren nach einem der Ansprüche 10 bis 14, dadurch gekennzeichnet, daß in Schritt (4) die Lösung, welche die Licht polarisierenden Partikel enthält, durch Beschichtung auf ein leitfähiges Substrat oder ein aus Glas oder einem PET-Film bestehendes Substrat aufgebracht wird.

16. Verfahren nach einem der Ansprüche 10 bis 15, dadurch gekennzeichnet, daß in Schritt (4) ein TCO-Elektrodensubstrat verwendet wird.

17. Verwendung der Filme nach einem der Ansprüche 1 bis 9 in Anzeigevorrichtungen für Kraftfahrzeuge, KraftfahrzeugWindschutzscheiben, Kraftfahrzeug-Rückspiegeln, Scheiben zur Gebäudeverglasung, Sonnenbrillen, optischen Shuttern und Flachbildschirmvorrichtungen.

18. Optische Shutter, die einen oder mehrere Filme nach einem der Ansprüche 1 bis 9 aufweisen.

## Revendications

1. Un film (13) pour un modulateur de lumière, comprenant :
(I) une matrice en polymère (16; 26),
et
(II) une suspension liquide, laquelle comprend :
- un milieu liquide de suspension (17; 27) qui est seulement partiellement compatible ou incompatible avec la matrice en polymère (16; 26) et qui a un indice de réfraction qui diffère au plus de 0,02 de celui de la matrice en polymère,
- un stabilisateur en polymère ou agent dispersant dissous dans le milieu liquide de suspension (17; 27), et
- des particules suspendues non liquides et cristallines polarisant la lumière (19; 29) ayant une grosseur inférieure à 1 micron,
et est dispersée dans la matrice en polymère (16; 26) sous la forme de micro-gouttelettes indépendantes (18) et/ou sous la forme d'une structure de micro-gouttelettes interconnectées (28),
les micro-gouttelettes et/ou la structure de micro-gouttelettes étant produites par séparation de phases.

2. Le film (13) selon la revendication 1, caractérisé en ce que la matrice en polymère (16; 26) est réalisée en résine polymère.

3. Le film (13) selon la revendication 2, caractérisé en ce que la matrice en polymère (16; 26) est réalisée en polymère de monomères vinyliques ou acryliques, ou en résine d'époxy, de silicone ou d'uréthane.

4. Le film (13) selon la revendication 2 et/ou 3, caractérisé en ce que la matrice en polymère (16; 26) est réalisée en polymère de méthyle-méthacrylate, en polymère de vinyle-butyral, en polymère de vinyle-acétate ou en acétate de cellulose.

5. Le film (13) selon l'une quelconque des revendications 1 à 4, caractérisé en ce que le milieu liquide de suspension (17; 27) est choisi parmi les esters, les huiles, les alcools aromatiques et les esters aromatiques.

6. Le film (13) selon l'une quelconque des revendications 1 à 5, caractérisé en ce que le milieu liquide de suspension (17; 27 ) est choisi parmi les copolymères fluorés et les plastifiants, tels que des phthalates et des isophthalates, des oléates, des adipates, des benzoates, des trimellitates trioctyliques.

7. Le film (13) selon l'une quelconque des revendications 1 à 6, caractérisé en ce que le stabilisateur en polymère ou agent dispersant est choisi parmi le polymère d'acide polyacrylique, le polymère de 2 hydroxyéthyle-méthacrylate, les copolymères acryliques, et les copolymères en masse du type A-B comprenant un composant d'ancrage (A) qui s'ancre sur la surface des particules polarisant la lumière (19; 29) ou sur un autre polymère se trouvant sur la surface des particules polarisant la lumière (19; 29), et un composant de solvatation ou de solubilisation (B), choisi parmi
le copolymère de néopentyle-méthacrylate associé avec du hydroxyéthyle-méthacrylate,
le copolymère de néopentyle-méthacrylate associé avec du styrène, et
le copolymère d'acrylonitrile associé avec du styrène.

8. Le film (13) selon l'une quelconque des revendications 1 à 7, caractérisé en ce que, dans la suspension de liquide,
- la quantité de particules polarisant la lumière (19; 29) est comprise entre 1 et 20 % en poids,
- la quantité de stabilisateurs de polymère ou d'agents de dispersion est comprise entre 1 et 20 % en poids, et dans le cas des copolymères en masse de type A-B, inférieure à 10 % en poids,
et
- la quantité du milieu de suspension (17; 27) est comprise entre 60 et 98 % en poids.

9. Le film (13) selon l'une quelconque des revendications 1 à 8, caractérisé en ce que les particules polarisant la lumière (19; 29) sont des particules de polyhaloïdes.

10. Un procédé destiné à la préparation du film (13) selon l'une quelconque des revendications 1 à 9, comprenant les étapes suivantes :
(I) dissolution dans un solvant de la résine polymère prévue pour la matrice en polymère (16; 26) ;
(II) préparation d'une suspension de particules polarisant la lumière (10; 29) dans un milieu liquide de suspension (17; 27), lequel est seulement partiellement compatible ou incompatible avec la résine polymère de la matrice en polymère (16; 26) comprenant le stabilisateur en polymère ou agent de dispersion, (III) mélange de la solution de résine polymère obtenue à l'étape (I) avec la suspension obtenue à l'étape (II) pour former une solution homogène comprenant les particules dispersées polarisant la lumière,
(IV) application de la solution homogène sur un substrat sous forme de film, et
(V) séparation de phases entre la phase de matrice en polymère et la phase de suspension de liquide et solidification ou gélification du polymère.

11. Le procédé selon la revendication 10, caractérisé en ce qu'à l'étape 5, sont effectués une évaporation du solvant provenant de la phase de matrice de polymère, un traitement thermique ou une émulsification.

12. Un procédé destiné à la préparation du film (13) selon l'une quelconque des revendications 1 à 9, comprenant les étapes suivantes :
(I) dissolution dans un solvant du monomère ou du prépolymère de la résine polymère prévue pour la matrice en polymère (16; 26) ;
(II) préparation d'une suspension de particules polarisant la lumière (19; 29) dans un milieu liquide de suspension (17; 27), lequel est seulement partiellement compatible ou incompatible avec la résine polymère de la matrice en polymère (16; 26) comprenant le stabilisateur en polymère ou agent de dispersion, (III) mélange de la solution obtenue durant l'étape (I) avec la solution obtenue à l'étape (II) pour former une solution homogène comprenant les particules polarisant la lumière dispersée,
(IV) application de la solution homogène sur un substrat sous forme de film, et
(V) séparation des phases et solidification ou formation d'un gel polymère par la polymérisation des monomères ou des prépolymères.

13. Le procédé selon l'une quelconque des revendications 10 à 12, caractérisé en ce qu'à l'étape (III), la solution mélangée est préparée à une température élevée, et à l'étape (V), la solution homogène est refroidie jusqu'à une lacune de miscibilité, ce qui provoque la séparation de phases.

14. Procédé selon l'une quelconque des revendications 10 à 13, caractérisé en ce que le solvant utilisé à l'étape (I) est choisi parmi :
- l'eau ;
- des esters, tels que l'acétate de méthyle, l'acétate d'éthyle, l'acétate d'isoamyle, l'acétate de benzyle, et le benzoate de méthyle ;
- des hydrocarbures aromatiques tels que le benzène, le xylène, le toluène ;
- l'acétone, le cétone d'éthyle méthyle (MEK), et le cyclohexanone ;
- l'acide formique et l'acide acétique ;
- le chlorure de méthylène, le chloroforme et le tétrachlorure de carbone ;
- le méthanol, l'éthanol, l'isopropanol, l'isobutanol, l'alcool benzoïque ;
- le dioxane et le tétrahydrofurane (THF) ;
- les phénols ;
- le nitroéthanne ;
- le formamide diméthylique (DMF) ;
- le sulfoxyde diméthylique (DMSO) ;
- la pyridine, et
- l'aniline.

15. Le procédé selon l'une quelconque des revendications 10 à 14, caractérisé en ce qu'à l'étape (IV), la solution comprenant les particules polarisant la lumière est appliquée sur un substrat conducteur, ou sur un substrat en verre ou sur un film PET.

16. Le procédé selon l'une quelconque des revendications 10 à 15, dans lequel un substrat d'électrodes TCO est utilisé à l'étape (IV).

17. Utilisation des films selon l'une quelconque des revendications 1 à 9 dans les dispositifs d'affichage automobile, les pare-brise d'automobile, les rétroviseurs d'automobile, les fenêtres pour le bâtiments, les lunettes de soleil, les obturateurs optiques et les dispositifs d'affichage à écran plat.

18. Obturateurs optiques, comprenant un ou plusieurs films selon l'une quelconque des revendications 1 à 9.
